# FASCICULE DE BREVET EUROPEEN

(11) **EP 3 090 115 B1**
(45) Date de publication et mention de la délivrance du brevet: **28.08.2019**
(21) Numéro de dépôt: 14821216.0
(22) Date de dépôt: 30.12.2014
(51) Int. Cl.: H02S 40/38, H02S 20/26, E06B 7/00, E06B 7/28

(54) **FENÊTRE POUR BÂTIMENT**
FENSTER FÜR EIN GEBÄUDE
WINDOW FOR A BUILDING

(30) Priorité: 31.12.2013 FR 1363726
(43) Date de publication de la demande: 09.11.2016
(73) Titulaire: Somfy Activites SA, 74300 Cluses (FR)
(72) Inventeur: ROUSSEAU, Fabien, F-74440 MIEUSSY (FR); MIGNOT, Pierre, F-05380 CHATEAUROUX LES ALPES (FR); CAVAREC, Pierre-Emmanuel, F-74130 MONT SAXONNEX (FR)
(74) Mandataire: Novaimo
(86) Numéro de dépôt international: PCT/EP2014/079408
(87) Numéro de publication internationale: WO 2015/101613

(56) Documents cités:
- WO-A1-2008/000084
- DE-U1-202010 014 775

## Description

L'invention concerne le domaine de la domotique. En particulier, elle concerne une fenêtre pour bâtiment présentant un élément photovoltaïque. Elle concerne aussi un système comprenant une telle fenêtre. L'invention concerne aussi un procédé de fonctionnement d'une telle fenêtre.

Des progrès récents dans le domaine photovoltaïque rendent possible de réaliser des vitrages photovoltaïques semi-transparents, voire transparents en faisant intervenir un procédé optique. Ainsi, l'énergie récupérée peut être réinjectée sur le réseau électrique via un onduleur. Une telle utilisation de l'énergie ne semble pas optimale.

En effet, cette énergie en quantité limitée part sur de longs réseaux filaires en provoquant des pertes par effet joule et la quantité d'énergie utile s'en trouve fortement diminuée.

Par ailleurs dans les bâtiments, des équipements électriques comme des motorisations de protections solaires sont souvent placés à proximité et ils sont soit connectés au réseau électrique, soit équipés de batteries pour les alimenter. Une telle fenêtre est connue par exemple par DE 202010014775 U1 ou WO 2008/000084 A1.

Le but de l'invention est de fournir un procédé et une fenêtre remédiant aux inconvénients relevés précédemment et améliorant les fenêtres connues de l'art antérieur. En particulier, l'invention propose une fenêtre permettant d'optimiser l'utilisation de l'énergie produite à son niveau par un élément photovoltaïque.

Selon l'invention, une fenêtre comprend un cadre de vitrage et un vitrage, le cadre comprenant un dispositif de distribution d'énergie électrique et de préférence un dispositif de communication d'informations. Le vitrage est au moins partiellement recouvert d'un film photovoltaïque transparent au moins connecté au dispositif de distribution d'énergie électrique. Le cadre inclut un élément de stockage d'énergie électrique connecté au moins au dispositif de distribution d'énergie électrique. La fenêtre comprend des moyens matériels et/ou logiciels permettant de mettre en oeuvre le procédé selon l'invention.

Le dispositif de distribution d'énergie électrique peut comprendre des premiers conducteurs électriques.

Le dispositif de communication d'informations peut comprendre des deuxièmes conducteurs électriques et/ou les premiers conducteurs électriques.

La fenêtre peut inclure un élément d'émission d'informations, notamment un élément d'émission d'une information de niveau de charge de l'élément de stockage d'énergie électrique.

Le cadre peut comprendre au moins une fiche reliée au dispositif de distribution d'énergie électrique et/ou au dispositif de communication d'informations.

Le cadre peut comprendre au moins un connecteur relié au dispositif de distribution d'énergie électrique et/ou au dispositif de communication d'informations.

La fenêtre peut comprendre une interface homme-machine présentant un élément de saisie d'informations et/ou un élément d'émission d'informations.

La fenêtre peut comprendre un élément de détermination d'un niveau de charge de l'élément de stockage d'énergie électrique.

L'élément de stockage d'énergie électrique peut n'être accessible que du coté intérieur de la fenêtre, soit par l'ouverture de la fenêtre, soit par un accès dédié, notamment une trappe.

Selon l'invention, un système domotique comprend :
- Une fenêtre définie précédemment ; et
- Un actionneur d'un équipement domotique de fermeture, de protection solaire ou d'occultation, comme une porte, un volet, un store, un rideau, un écran, l'actionneur étant connecté au dispositif de distribution d'énergie électrique et/ou un dispositif de communication d'informations ; et/ou
- Un équipement électronique comme un capteur ou un ordinateur ou un téléphone ou un équipement multimédia connecté au dispositif de distribution d'énergie électrique et/ou un dispositif de communication d'informations.

Selon l'invention, un procédé régit le fonctionnement d'une fenêtre telle que définie précédemment et d'une pluralité d'équipements utilisant l'énergie électrique de l'élément de stockage d'énergie électrique. Le procédé comprend une phase de gestion de la disponibilité des équipements dépendante de l'état de charge de l'élément de stockage d'énergie électrique.

La phase de gestion peut comprendre une étape de détermination d'une liste d'équipements choisis parmi la pluralité des équipements en fonction de l'état de charge de l'élément de stockage d'énergie électrique de telle sorte que la liste d'équipements présente un fonctionnement prioritaire par rapports aux équipements restants de la pluralité d'équipements.

L'invention porte encore sur un programme informatique comprenant un moyen de code de programme informatique adapté à la réalisation des phases et/ou étapes du procédé de fonctionnement défini précédemment, lorsque le programme tourne sur un ordinateur.

L'invention sera mieux comprise à la lecture de la description qui va suivre, donnée uniquement à titre d'exemple et faite en se référant aux dessins annexés sur lesquels :
La figure 1 représente un schéma d'un mode de réalisation d'un système domotique comprenant un mode de réalisation d'une fenêtre selon l'invention.
La figure 2 représente sous forme de schéma un mode d'exécution un procédé de fonctionnement d'une fenêtre selon l'invention.

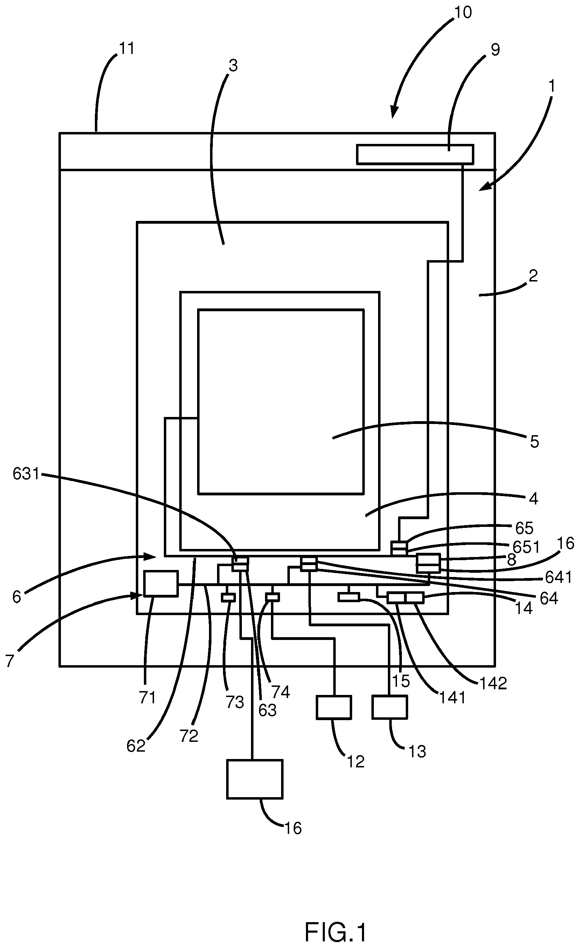

Un mode de réalisation d'un système domotique 10 est décrit ci-après en référence à la figure 1.

Le système 10 domotique comprend :
- une fenêtre 1, et
- un actionneur 9 d'un équipement 11 domotique de fermeture, de protection solaire ou d'occultation, comme une porte, un volet, un store, un rideau ou un écran, l'actionneur étant connecté à un dispositif 6 de distribution d'énergie électrique et/ou à un dispositif 7 de communication d'informations, et/ou
- un équipement électronique 12, 13 comme un capteur ou un ordinateur ou un téléphone ou un équipement multimédia connecté au dispositif 6 de distribution d'énergie électrique et/ou un dispositif 7 de communication d'informations.

Dans le mode de réalisation représenté, l'actionneur 9 est par exemple un actionneur d'un store 11 ou d'un volet roulant 11 monté au niveau de la fenêtre, notamment monté au dessus de la fenêtre. Ainsi, l'équipement 11 permet d'assurer une fonction au niveau de la fenêtre, voire au niveau du vitrage de la fenêtre.

La fenêtre 1 comprend un cadre 2, 3 de vitrage et un vitrage 4. Le cadre comprend un cadre de dormant et/ou un cadre de battant. Dans le cas d'une fenêtre à battant mobile entre une position fermée et une position ouverte, le cadre comprend un cadre 2 de dormant et un cadre 3 de battant. Dans le cas d'une fenêtre à vitrage fixe, le cadre comprend un unique cadre de dormant.

Le cadre comprend un dispositif 6 de distribution d'énergie électrique et/ou un dispositif 7 de communication d'informations. Dans le mode de réalisation de la figure 1, le cadre comprend un dispositif 6 de distribution d'énergie électrique et un dispositif 7 de communication d'informations.

Le vitrage est au moins partiellement recouvert d'un film photovoltaïque transparent 5 au moins connecté au dispositif de distribution d'énergie électrique. Par « film photovoltaïque transparent », on entend un film permettant de laisser passer la majeure partie, par exemple au moins 70%, de l'intensité d'un rayonnement visible. Le film peut recouvrir la totalité du vitrage. Ainsi, le film peut être disposé sur toute une face intérieure ou extérieure du vitrage. Alternativement, le film peut ne recouvrir que partiellement le vitrage. Par exemple, le film peut ne recouvrir qu'une partie inférieure ou qu'une partie supérieure du vitrage. La connexion du film au dispositif de distribution d'énergie électrique permet au film de fournir l'énergie électrique qu'il convertit à partir du rayonnement lumineux au dispositif de distribution d'énergie électrique.

Le cadre, notamment le cadre 2 de dormant et/ou le cadre 3 de battant, inclut un élément 8 de stockage d'énergie électrique connecté au moins au dispositif de distribution d'énergie électrique. Cet élément de stockage d'énergie comprend par exemple une batterie. Cet élément est donc chargé comme vu précédemment par l'énergie électrique issue du film. Cette énergie électrique est transmise à l'élément de stockage via le dispositif 6 de distribution d'énergie électrique.

De préférence, l'élément de stockage d'énergie est implanté du côté intérieur de la fenêtre, c'est-à-dire séparé de l'extérieur par une barrière thermique mise en place dans la fenêtre. En effet, les éléments de stockage de type batterie sont sensibles aux variations de température. Ainsi, du côté intérieur relativement à la barrière thermique, l'élément de stockage est protégé contre les variations importantes de température. Sa durée de vie est donc augmentée. De plus, les opérations de maintenance sont facilitées. Préférentiellement, l'élément de stockage d'énergie est placé à l'intérieur du cadre de la fenêtre pour favoriser l'esthétique de la fenêtre. Toutefois, dans ce cas, l'élément de stockage d'énergie est fixé à la partie intérieure du cadre et est séparé de la face extérieure par une lame d'air ou tout autre matériau isolant thermique. Une trappe d'accès à cet élément de stockage d'énergie peut être formée dans le but de faciliter la maintenance de cet élément.

La fenêtre, en particulier le cadre, notamment le cadre 2 de dormant et/ou le cadre 3 de battant, inclut un élément 15 d'émission d'informations. Notamment, l'élément d'émission d'informations peut être un élément d'émission d'une information de niveau de charge de l'élément de stockage d'énergie électrique. L'élément d'émission d'informations peut aussi permettre l'émission de nombreuses autres informations telles qu'une information de défaut d'un actionneur, une information d'intrusion, une information d'état d'un capteur. L'élément 15 d'émission d'informations peut être un émetteur de signaux électromagnétiques, notamment un émetteur radio.

Le dispositif 6 de distribution d'énergie électrique comprend des premiers conducteurs électriques 62 ou un bus d'alimentation permettant de relier le film à la batterie et permettant également de relier le dispositif à un ou plusieurs équipements différents, en particulier à l'équipement domotique 11, plus précisément à l'actionneur 9 de l'équipement domotique 11. Pour ce faire, le dispositif de distribution d'énergie électrique comprend au moins une fiche 63, 64, 65 ou connecteur relié aux premiers conducteurs électriques. Cette fiche ou ce connecteur permet, à l'aide d'une fiche ou d'un connecteur complémentaire, la connexion électrique à un équipement domotique 11 ou à d'autres équipements électroniques 13, 16 comme un capteur ou un ordinateur ou un téléphone ou un équipement multimédia.

Avantageusement, des interrupteurs commandés 631, 641 et 651 sont intercalés entre les fiches ou connecteurs et les premiers conducteurs électriques 62. Ainsi, les équipements domotiques peuvent être sélectivement connectés et déconnectés des conducteurs électriques 62 et donc du dispositif de distribution d'énergie électrique. Alternativement, la fenêtre peut être munie d'une unité logique de traitement 71 susceptible de communiquer avec d'autres éléments via un élément de communication radio. Les interrupteurs 631, 641 et 651 peuvent être placés sur la même carte électronique de commande que l'unité logique de traitement. Les interrupteurs peuvent être des relais, des transistors ou à base de toute autre technologie équivalente permettant de mettre sous tension un équipement. De la même manière, ces interrupteurs peuvent être placés sur les équipements eux-mêmes toujours sous la forme de relais ou de transistor ou de toute autre technologie équivalente.

Le dispositif 7 de communication d'informations comprend des deuxièmes conducteurs 72 ou un bus de communication permettant la communication d'informations entre différents éléments du système, en particulier entre différents éléments de la fenêtre. Pour ce faire, le dispositif de distribution d'énergie électrique comprend au moins une fiche 73, 74 ou connecteur relié aux deuxièmes conducteurs électriques. Cette fiche ou ce connecteur permet, à l'aide d'une fiche ou d'un connecteur complémentaire, la connexion à un équipement domotique autonome comme un capteur 12. Le dispositif de communication d'information comprend encore de préférence une unité logique de traitement 71 et/ou l'élément 15 d'émission d'informations et/ou une interface homme-machine 14 et/ou un élément 16 de surveillance de l'élément de stockage d'énergie électrique, notamment un élément de détermination de l'état de charge de l'élément de stockage d'énergie électrique.

L'interface homme-machine 14 comprend un élément 141 de saisie d'informations et/ou un élément 142 de signification d'informations, notamment d'affichage d'information. Avantageusement, l'interface peut être un écran tactile. Cette interface permet à un utilisateur d'interagir avec la fenêtre, voire avec le système. L'élément de saisie d'informations peut comprendre au moins un capteur acoustique et/ou vibratoire, notamment au moins un capteur acoustique et/ou vibratoire disposé dans le cadre. L'au moins un capteur acoustique et/ou vibratoire est avantageusement apte à détecter des chocs sur le vitrage.

L'élément de saisie d'informations peut comprendre au moins un élément d'interprétation apte à convertir le signal issu de l'au moins un capteur acoustique en un signal d'information.

L'élément de signification d'information peut comprendre un élément d'affichage d'une information visuelle. Cet élément d'affichage peut comprendre un élément d'émission d'un signal lumineux comme une diode électroluminescente, notamment un élément d'émission d'un signal lumineux dans l'épaisseur du vitrage. Alternativement ou complémentairement, l'élément d'affichage d'une information visuelle peut comprendre un élément d'affichage du type à encre électronique.

L'élément 16 de détermination de niveau de charge de l'élément 8 de stockage d'énergie électrique peut par exemple réaliser une détermination du niveau de charge par estimation ou par mesure. Cette détermination est réalisée notamment par utilisation de valeurs de paramètres physico-chimiques de l'élément de stockage.

Au moins une fiche ou connecteur 63, 64, 65, 73, 74 peut être du type USB. Avantageusement, les fiches ou connecteurs peuvent être fixées sur un rail solidaire, en particulier fixé, au cadre du battant ou au cadre du dormant. Avantageusement, au moins une fiche ou connecteur peut être mobile, notamment mobile en translation longitudinale, relativement au rail. Pour ce faire la fiche peut être montée sur un charriot mobile relativement au cadre, le charriot étant notamment guidé dans un guidage prévu sur le cadre. De préférence, au moins une fiche est montée sur le cadre. En particulier, au moins une fiche est montée apparente sur le cadre, une fois la fenêtre montée.

La fiche peut aussi consister en un rail de fixation mécanique et de connexion électrique.

Les interrupteurs commandés 631, 641 et 651 sont de préférence reliés au dispositif 7 de communication d'informations. Ainsi, l'unité logique de traitement permet la commande de la connexion et de la déconnexion des équipements domotiques du dispositif de distribution d'énergie en fonction d'informations auxquelles elle a accès, notamment en fonction d'une information de charge de l'élément de stockage.

Alternativement, au niveau du dispositif de communication d'informations, d'autres moyens de communication peuvent être utilisés, comme des éléments de communication non filaires, la communication pouvant être réalisée par ondes électromagnétiques, notamment radio entre les différents éléments.

La fenêtre, en particulier l'unité logique de traitement 71, comprend des moyens matériels et/ou logiciels permettant de mettre en oeuvre le procédé de fonctionnement selon l'invention, notamment de mettre en oeuvre les étapes du procédé de fonctionnement selon l'invention. Les éléments logiciels peuvent comprendre des programmes informatiques ou des modules logiciels. La fenêtre comprend ainsi par exemple un élément de détermination de l'état de charge de l'élément de stockage, un élément de sélection automatique d'un sous-ensemble d'équipements domotiques parmi un ensemble d'éléments domotiques et des éléments de connexion et/ou de déconnexion des équipements domotiques de l'élément de stockage.

Avantageusement, le dispositif 6 de distribution d'énergie électrique et le dispositif 7 de communication d'informations peuvent être réalisés par sensiblement les mêmes éléments matériels. Dans ce cas, les informations peuvent consister en des signaux électriques circulant sur les conducteurs d'alimentation en utilisant une technologie de courants porteurs en ligne.

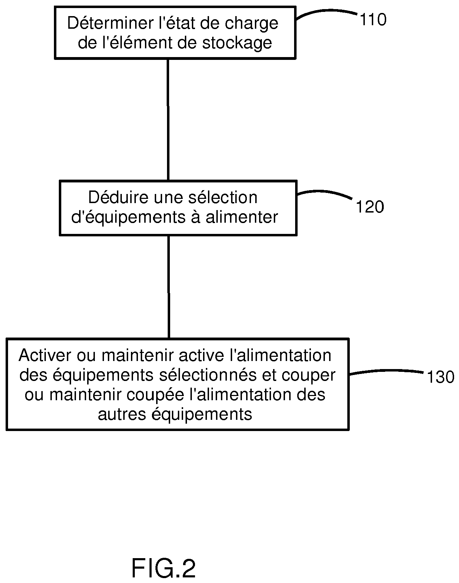

Un mode d'exécution d'un procédé de fonctionnement selon l'invention est décrit ci-après en référence à la figure 2. Le procédé permet de régir le fonctionnement de la fenêtre selon l'invention et en particulier le fonctionnement de la fenêtre telle que décrite précédemment. Le procédé permet aussi de régir le fonctionnement du système domotique selon l'invention et en particulier le fonctionnement du système domotique tel que décrit précédemment.

Globalement, le procédé de fonctionnement comprend une phase de gestion de la disponibilité des équipements domotique, cette gestion étant dépendante de l'état de charge de l'élément de stockage d'énergie électrique.

Dans une première étape 110, on détermine l'état de charge de l'élément de stockage. Cette étape est par exemple réalisée par l'action de l'élément 16 de surveillance de l'élément de stockage d'énergie électrique qui détermine l'état de charge. Cette information est ensuite communiquée à l'unité logique de traitement.

Dans une deuxième étape 120, on déduit une sélection d'équipements domotiques à alimenter ou une liste d'équipements domotiques à alimenter. Cette sélection ou liste constitue un sous-ensemble de l'ensemble des équipements domotiques connectés à la fenêtre, plus précisément connectés au dispositif 6 de distribution d'énergie électrique. Le sous-ensemble peut à l'extrême n'inclure aucun équipement ou inclure tous les équipements domotiques de l'ensemble. Cette déduction est réalisée en fonction de la valeur de l'état de charge de l'élément de stockage d'énergie électrique. Cette déduction est automatique. Cette déduction est de préférence réalisée au niveau de l'unité logique de traitement ou réalisée par l'unité logique de traitement. Par exemple, la déduction est réalisée par lecture, dans une table ou dans une mémoire, de sous-ensembles d'identifiants d'équipements domotiques associés à des plages de valeurs d'état de charge de l'élément de stockage d'énergie électrique, un sous-ensemble étant associé à chaque plage de valeurs. La définition des sous-ensembles peut ne dépendre que de la valeur d'état de charge. Alternativement, la définition des sous-ensembles peut complémentairement dépendre d'un ou plusieurs autres paramètres comme un paramètre temporel ou un paramètre météorologique. En outre, sur la base de prévisions météo pessimistes communiquées ou sur la base de la mesure d'un ensoleillement plus faible que l'ensoleillement habituellement mesuré, l'unité logique de traitement peut anticiper une défaillance d'énergie de l'élément de stockage et donc redéfinir les sous-ensembles en conséquence.

Dans une troisième étape 130, on active ou on maintient activée l'alimentation électrique des équipements domotiques de la sélection ou du sous-ensemble déterminé à l'étape précédente tandis qu'on coupe ou on maintient coupée l'alimentation électrique des autres équipements domotiques. Cette étape est par exemple commandée par l'unité logique de traitement qui agit sur les interrupteurs commandés. Ainsi, la sélection ou la liste des équipements domotiques présente un fonctionnement prioritaire par rapports aux équipements restants de l'ensemble des équipements.

Alternativement ou complémentairement, plutôt que couper l'alimentation de certains éléments domotiques comme mentionné dans l'étape 120, il est possible de commander le passage de certains éléments domotiques dans un autre mode de fonctionnement dans lequel leur consommation est diminuée. Ceci peut être réalisé grâce à l'action de l'élément 15 d'émission d'informations qui peut, commandé par l'unité logique de traitement, émettre des messages de requêtes de changement d'état de fonctionnement à destination de certains équipements domotiques. Ainsi, en fonction de l'état de charge, au moins un équipement non-prioritaire peut passer dans un mode de fonctionnement dégradé ou être déconnecté de l'élément de stockage d'énergie électrique.

Comme vu précédemment, l'état de charge de l'élément de stockage d'énergie électrique est mesurable, mais il peut aussi être estimé (sur la base d'une mesure de tension de l'élément et de la température ou bien en mesurant les énergies entrantes et sortantes). L'état de santé de l'élément de stockage peut aussi être une donnée intéressante en fonction de laquelle on peut définir le sous-ensemble des équipements domotiques prioritaires et, en conséquence, le sous-ensemble des équipements domotiques non-prioritaires. Toutefois, la détermination de la valeur d'état de santé est plus délicate et peut faire intervenir l'âge de l'élément de stockage.

Il est aussi possible que les différents éléments domotiques déterminent leur propre consommation et la communiquent à l'unité logique de traitement pour utilisation dans l'étape 120.

Les changements de mode de fonctionnement évoqués précédemment et permettant de limiter la consommation d'énergie peuvent être caractérisés par :
- un ralentissement de la vitesse d'un moteur d'un actionneur (ce qui limite la consommation d'énergie et alerte l'utilisateur du niveau d'énergie faible) ; et/ou
- une interdiction d'activation d'actionneurs en conséquence d'ordres de commande générés automatiquement ; et/ou
- une interdiction d'activation d'actionneurs dont la conséquence serait d'occulter le film photovoltaïque produisant de l'énergie.

Les éléments domotiques peuvent inclure un équipement domotique motorisé de fermeture, de protection solaire ou d'occultation, comme une porte, un volet, un store, un rideau, un écran, et/ou un dispositif de communication d'informations et/ou un équipement électronique comme un capteur.

## Revendications

1. Procédé de fonctionnement d'une fenêtre et d'une pluralité d'équipements utilisant l'énergie électrique d'un élément (8) de stockage d'énergie électrique, la fenêtre (1) comprenant un cadre (2 ; 3) de vitrage et un vitrage (4), le cadre comprenant un dispositif (6) de distribution d'énergie électrique et/ou un dispositif (7) de communication d'informations, le vitrage étant au moins partiellement recouvert d'un film photovoltaïque transparent (5) au moins connecté au dispositif de distribution d'énergie électrique, le cadre incluant l'élément (8) de stockage d'énergie électrique connecté au moins au dispositif de distribution d'énergie électrique, le procédé comprenant une phase de gestion de la disponibilité des équipements dépendante de l'état de charge de l'élément de stockage d'énergie électrique.

2. Procédé selon la revendication précédente, **caractérisé en ce que** la phase de gestion comprend une étape de détermination d'une liste d'équipements choisis parmi la pluralité d'équipements en fonction de l'état de charge de l'élément de stockage d'énergie électrique de telle sorte que la liste d'équipements présente un fonctionnement prioritaire par rapports aux équipements restants de la pluralité d'équipements.

3. Fenêtre (1) comprenant un cadre (2 ; 3) de vitrage et un vitrage (4), le cadre comprenant un dispositif (6) de distribution d'énergie électrique et de préférence un dispositif (7) de communication d'informations, le vitrage étant au moins partiellement recouvert d'un film photovoltaïque transparent (5) au moins connecté au dispositif de distribution d'énergie électrique, le cadre incluant un élément (8) de stockage d'énergie électrique connecté au moins au dispositif de distribution d'énergie électrique, **caractérisé en ce que** la fenêtre comprend des moyens matériels et/ou logiciels permettant de mettre en oeuvre le procédé selon les revendications précédentes.

4. Fenêtre selon la revendication précédente, **caractérisée en ce que** le dispositif de distribution d'énergie électrique comprend des premiers conducteurs électriques (62).

5. Fenêtre selon l'une des revendications 3 à 4, **caractérisée en ce que** le dispositif de communication d'informations comprend des deuxièmes conducteurs électriques (72) et/ou les premiers conducteurs électriques.

6. Fenêtre selon l'une des revendications 3 à 5, **caractérisée en ce que** la fenêtre inclut un élément (15) d'émission d'informations, notamment un élément d'émission d'une information de niveau de charge de l'élément de stockage d'énergie électrique.

7. Fenêtre selon l'une des revendications 3 à 6, **caractérisée en ce que** le cadre comprend au moins une fiche (63 ; 73) reliée au dispositif (6) de distribution d'énergie électrique et/ou au dispositif (7) de communication d'informations.

8. Fenêtre selon l'une des revendications 3 à 7, **caractérisée en ce que** le cadre comprend au moins un connecteur (64 ; 74) relié au dispositif (6) de distribution d'énergie électrique et/ou au dispositif (7) de communication d'informations.

9. Fenêtre selon l'une des revendications 3 à 8, **caractérisée en ce qu'**elle comprend une interface homme-machine (14) présentant un élément (141) de saisie d'informations et/ou un élément (142) d'émission d'informations.

10. Fenêtre selon l'une des revendications 3 à 9, **caractérisée en ce qu'**elle comprend un élément (16) de détermination d'un niveau de charge de l'élément (8) de stockage d'énergie électrique.

11. Fenêtre selon l'une des revendications 3 à 10, **caractérisée en ce que** l'élément de stockage d'énergie électrique n'est accessible que du coté intérieur de la fenêtre, soit par l'ouverture de la fenêtre, soit par un accès dédié, notamment une trappe.

12. Système (10) domotique comprenant:
- Une fenêtre (1) selon l'une des revendications 3 à 11; et
- Un actionneur (9) d'un équipement (11) domotique de fermeture, de protection solaire ou d'occultation, comme une porte, un volet, un store, un rideau, un écran, l'actionneur étant connecté au dispositif (6) de distribution d'énergie électrique et/ou un dispositif (7) de communication d'informations ; et/ou
- Un équipement électronique (12 ; 13) comme un capteur ou un ordinateur ou un téléphone ou un équipement multimédia connecté au dispositif (6) de distribution d'énergie électrique et/ou un dispositif (7) de communication d'informations.

13. Programme d'ordinateur comprenant des instructions qui, lorsque le programme est exécuté par un ordinateur, conduisent celui-ci à mettre en oeuvre le procédé selon l'une des revendications 1 à 2.

## Patentansprüche

1. Verfahren zum Betreiben eines Fensters und einer Vielzahl von Ausrüstungen unter Verwendung von elektrischer Energie eines Elements (8) zum Speichern von elektrischer Energie, wobei das Fenster (1) einen Verglasungsrahmen (2; 3) und eine Verglasung (4) umfasst, wobei der Rahmen eine Vorrichtung (6) zur Verteilung von elektrischer Energie und/oder eine Vorrichtung (7) zur Kommunikation von Informationen umfasst, wobei die Verglasung mindestens teilweise mit einem transparenten Photovoltaikfilm (5) bedeckt ist, der mindestens mit der Vorrichtung zur Verteilung von elektrischer Energie verbunden ist, wobei der Rahmen ein Element (8) zum Speichern von elektrischer Energie aufweist, das mindestens mit der Vorrichtung zur Verteilung von elektrischer Energie verbunden ist, wobei das Verfahren eine Phase der Steuerung der Verfügbarkeit der Ausrüstungen in Abhängigkeit von dem Zustand der Ladung des Elements zum Speichern von elektrischer Energie umfasst.

2. Verfahren nach dem vorhergehenden Anspruch, **dadurch gekennzeichnet, dass** die Steuerungsphase einen Schritt der Bestimmung einer Liste von Ausrüstungen umfasst, die aus einer Vielzahl von Ausrüstungen als Funktion des Zustands der Ladung des Elements zum Speichern von elektrischer Energie derart ausgewählt werden, dass die Liste der Ausrüstungen einen prioritären Betrieb in Bezug auf die übrigen Ausrüstungen der Vielzahl von Ausrüstungen aufweist.

3. Fenster (1), umfassend einen Verglasungsrahmen (2; 3) und eine Verglasung (4), wobei der Rahmen eine Vorrichtung (6) zur Verteilung von elektrischer Energie und vorzugsweise eine Vorrichtung (7) zur Kommunikation von Informationen umfasst, wobei die Verglasung mindestens teilweise mit einem transparenten Photovoltaikfilm (5) bedeckt ist, der mindestens mit der Vorrichtung zur Verteilung von elektrischer Energie verbunden ist, wobei der Rahmen ein Element (8) zum Speichern von elektrischer Energie aufweist, das mindestens mit der Vorrichtung zur Verteilung von elektrischer Energie verbunden ist,
**dadurch gekennzeichnet, dass** das Fenster Hardware- und/oder Software-Mittel umfasst, die es gestatten, das Verfahren nach den vorhergehenden Ansprüchen durchzuführen.

4. Fenster nach dem vorhergehenden Anspruch,
**dadurch gekennzeichnet, dass** die Vorrichtung zur Verteilung von elektrischer Energie erste elektrische Leiter (62) umfasst.

5. Fenster nach einem der Ansprüche 3 bis 4,
**dadurch gekennzeichnet, dass** die Vorrichtung zur Kommunikation von Informationen zweite elektrische Leiter (72) und/oder die ersten elektrischen Leiter umfasst.

6. Fenster nach einem der Ansprüche 3 bis 5,
**dadurch gekennzeichnet, dass** das Fenster ein Element (15) zum Senden von Informationen umfasst, insbesondere ein Element zum Senden einer Information des Pegels der Ladung des Elements zum Speichern von elektrischer Energie.

7. Fenster nach einem der Ansprüche 3 bis 6,
**dadurch gekennzeichnet, dass** der Rahmen mindestens einen Stecker (63; 73) umfasst, der mit der Vorrichtung (6) zur Verteilung von elektrischer Energie und/oder mit der Vorrichtung (7) zur Kommunikation von Informationen verbunden ist.

8. Fenster nach einem der Ansprüche 3 bis 7,
**dadurch gekennzeichnet, dass** der Rahmen mindestens einen Anschluss (64; 74) umfasst, der mit der Vorrichtung (6) zur Verteilung von elektrischer Energie und/oder mit der Vorrichtung (7) zur Kommunikation von Informationen verbunden ist.

9. Fenster nach einem der Ansprüche 3 bis 8,
**dadurch gekennzeichnet, dass** dieses eine Mensch-Maschinen-Schnittstelle (14) umfasst, die ein Element (141) zur Erfassung von Informationen und/oder ein Element (142) zum Senden von Informationen umfasst.

10. Fenster nach einem der Ansprüche 3 bis 9,
**dadurch gekennzeichnet, dass** dieses ein Element (16) zur Bestimmung eines Pegels der Ladung des Elements (8) zum Speichern von elektrischer Energie umfasst.

11. Fenster nach einem der Ansprüche 3 bis 10,
**dadurch gekennzeichnet, dass** das Element zum Speichern von elektrischer Energie nur von der Innenseite des Fensters entweder durch Öffnen des Fensters oder durch einen dedizierten Zugang, insbesondere eine Luke, zugänglich ist.

12. Haustechniksystem (10), umfassend:
ein Fenster (1) nach einem der Ansprüche 3 bis 11, und
einen Betätiger (9) einer Haustechnikausrüstung (11) für ein Schließen, einen Sonnenschutz oder eine Verdunklung, wie einer Tür, einer Klappe, einer Jalousie, eines Vorhangs, eines Schirms, wobei der Betätiger mit der Vorrichtung (6) zur Verteilung von elektrischer Energie und/oder einer Vorrichtung (7) zur Kommunikation von Informationen verbunden ist; und/oder
eine elektronische Ausrüstung (12; 13), wie einen Sensor oder einen Computer oder ein Telefon oder eine Multimedia-Ausrüstung, die mit der Vorrichtung (6) zur Verteilung von elektrischer Energie und/oder einer Vorrichtung (7) zur Kommunikation von Informationen verbunden sind.

13. Computerprogramm, umfassend Instruktionen, die, wenn das Programm von einem Computer ausgeführt wird, denselben veranlassen, das Verfahren nach einem der Ansprüche 1 bis 2 durchzuführen.

## Claims

1. Method for operating a window and a plurality of appliances using the electrical energy from an electrical energy storage element (8), the window (1) comprising a glazing frame (2; 3) and a glazing (4), the frame comprising an electrical energy distribution device (6) and/or an information communication device (7), the glazing being at least partially covered with a transparent photovoltaic film (5) which is at least connected to the electrical energy distribution device, the frame including the electrical energy storage element (8) which is connected at least to the electrical energy distribution device, the method comprising a phase of managing the availability of the appliances that is dependent on the state of charge of electrical energy storage element.

2. Method according to the preceding claim, **characterized in that** the management phase comprises a step of determining a list of appliances chosen from among the plurality of appliances according to the state of charge of the electrical energy storage element such that the list of appliances has priority in terms of operation over the remaining appliances of the plurality of appliances.

3. Window (1) comprising a glazing frame (2; 3) and a glazing (4), the frame comprising an electrical energy distribution device (6) and preferably an information communication device (7), the glazing being at least partially covered with a transparent photovoltaic film (5) which is at least connected to the electrical energy distribution device, the frame including an electrical energy storage element (8) which is connected at least to the electrical energy distribution device, **characterized in that** the window comprises hardware and/or software means allowing the method according to the preceding claims to be implemented.

4. Window according to the preceding claim, **characterized in that** the electrical energy distribution device comprises first electrical conductors (62).

5. Window according to either of Claims 3 and 4, **characterized in that** the information communication device comprises second electrical conductors (72) and/or the first electrical conductors.

6. Window according to one of Claims 3 to 5, **characterized in that** the window includes an information transmission element (15), in particular an element for transmitting information on the level of charge of the electrical energy storage element.

7. Window according to one of Claims 3 to 6, **characterized in that** the frame comprises at least one plug (63; 73) connected to the electrical energy distribution device (6) and/or to the information communication device (7).

8. Window according to one of Claims 3 to 7, **characterized in that** the frame comprises at least one connector (64; 74) connected to the electrical energy distribution device (6) and/or to the information communication device (7).

9. Window according to one of Claims 3 to 8, **characterized in that** it comprises a human-machine interface (14) having an element (141) for inputting information and/or an element (142) for transmitting information.

10. Window according to one of Claims 3 to 9, **characterized in that** it comprises an element (16) for determining a level of charge of the electrical energy storage element (8).

11. Window according to one of Claims 3 to 10, **characterized in that** the electrical energy storage element is accessible only from the interior side of the window, either by opening the window or by means of a dedicated access, in particular a hatch.

12. Home-automation system (10) comprising:
- a window (1) according to one of Claims 3 to 11; and
- an actuator (9) for a home-automation appliance (11) for closing, for sun protection or for screening, such as a door, a shutter, a blind, a curtain, a screen, etc., the actuator being connected to the electrical energy distribution device (6) and/or an information communication device (7); and/or
- an electronic appliance (12; 13) such as a sensor, a computer, a telephone or a multimedia appliance that is connected to the electrical energy distribution device (6) and/or an information communication device (7).

13. Computer program comprising instructions which, when said program is run by a computer, result in the latter implementing the method according to either of Claims 1 and 2.
